# EUROPEAN PATENT SPECIFICATION

(11) **EP 4 147 041 B1**
(45) Date of publication and mention of the grant of the patent: **18.11.2026**
(21) Application number: 21724792.3
(22) Date of filing: 05.05.2021
(51) Int. Cl.: G01N 30/88, G01N 30/60, G01N 30/72, G01N 30/74, G01N 30/34

(54) **LIQUID CHROMATOGRAPHY BASED DETECTION AND QUANTITATION OF REMDESIVIR AND ITS ACTIVE METABOLITES**
NACHWEIS UND QUANTIFIZIERUNG VON REMDESIVIR UND DESSEN AKTIVEN METABOLITEN MITTELS FLUESSIGKEITSCHROMATOGRAPHIE
DÉTECTION ET QUANTIFICATION DE REMDESIVIR ET DE SES MÉTABOLITES ACTIFS AVEC CHROMATOGRAPHIE LIQUIDE

(30) Priority: 05.05.2020 US 202063020317 P
(43) Date of publication of application: 15.03.2023
(73) Proprietor: Waters Technologies Corporation, Milford, MA 01757 (US)
(72) Inventor: LAUBER, Matthew A., Smithfield, Rhode Island 02896 (US); JUNG, Moon Chul, Waltham, Massachusetts 02451 (US); WALTER, Thomas, Ashland, Massachusetts 01721 (US); WYNDHAM, Kevin, Upton, Massachusetts 01568 (US); CALTON, Lisa Jane, Stockport Cheshire SK7 4JA (GB); PATEL, Amit, Shrewsbury, Massachusetts 01545 (US); DAVEY, Leanne, Wellingtonbridge, Y35 YV26 (IE); MORRISSEY, David, Foulksmills, Y35 XT29 (IE); FOLEY, Dominic, Cheshire SK9 4AX (GB); ALDEN, Bonnie, Whitinsville, Massachusetts 01588 (US)
(74) Representative: Forresters IP LLP
(86) International application number: PCT/IB2021/053818
(87) International publication number: WO 2021/224834

(56) References cited:
- WO-A2-2017/189357
- US-A1- 2019 086 371
- US-A1- 2020 215 457
- ITOH H ET AL: "High-performance liquid chromatographic separation of nucleic acids on a fluorocarbon-bonded silica gel column", JOURNAL OF CHROMATOGRAPHY A 1994 NL, vol. 662, no. 1, 1994, pages 95 - 99, XP026503690, ISSN: 0021-9673

## Description

### Related Applications

This application claims the benefit of and priority to U.S. provisional patent application Ser. No. 63/020,317, filed May 5, 2020, and entitled "Liquid Chromatography Based Quantitation of Phospho Prodrugs and Their Active Metabolites".

### Field of the Technology

The present disclosure relates to the use of vapor deposition coated flow paths for improved chromatography and sample analysis using liquid chromatography - mass spectrometry (LC/MS) or liquid chromatography - ultra violet detection (LC/UV). More specifically, this technology relates to separating and quantitation of analytes (phospho prodrugs and their active metabolite) from a sample matrix (e.g., mammalian blood, plasma) using chromatographic devices and fluidic systems having coated flow paths. The present disclosure also relates to methods providing improved recovery, peak shape, and dynamic range in an LC-MS or LC-UV method for the quantitation of prodrugs and their active metabolites.

### Background

Nucleic acid polymerases are enzymes that catalyze the replication and transcription of genetic information. Being that they play such a pivotal biological role, it is not surprising that they are also a very important druggable target. Structural differences between viral polymerases and human polymerases has given hope for efficacious antiviral treatments. There are many different types of viruses, but each will store genetic information in either a DNA or RNA genome. Viral DNA or RNA polymerases can thus be targeted with substrate analogs to inhibit productive replication. In an ordinary replication event, the substrate is a nucleotide triphosphate, such as adenosine triphosphate (ATP). Alternatively, a nucleotide analog can be dosed to disrupt important events, like chain termination.

In the case of SARS-CoV-2 (i.e., COVID-19), an RNA polymerase is responsible for genome replication. Two antivirals with promising *in vitro* efficacy against the novel coronavirus are being tested on patients. One is favipiravir (6-fluoro-3-hydroxy-2-pyrazinecarboxamide), a nucleobase analog and prodrug that is metabolized into favipiravir-ribofuranosyl-5'-triphosphate (favipiravir-RTP). It is believed that a phosphoribosyltransferase is responsible for the cellular activation of the drug. In its triphosphate activated form, it becomes a potent effector of RNA replication in viruses, such as influenza and Ebola (i.e., a polymerase inhibitor). There is promise for favipiravir to inhibit the replication of SARS-CoV-2 and a number of patient trials are underway globally. Another viable drug for SARS-CoV-2 treatment is remdesivir, a phosphoramidate prodrug that is converted intracellularly into an active triphosphate form. The promise of these antivirals and others like them has led to an explosion of new clinical studies.

In clinical trials, patients are closely monitored throughout a dose regimen to gather information on so-called pharmacokinetic and pharmacodynamic profiles. In instances of the compassionate use of an investigation dug, patients are also frequently monitored to avoid subtherapeutic dosing and avoid toxic plasma concentrations. In both cases, blood samples are regularly acquired and assays are performed to measure the concentration of the administered drug and to observe its effect it has on the body including the quantity of active metabolites created in vivo by the subject. In both cases, enzyme linked immunosorbent assays can be employed.

In some cases, it is of interest to monitor biotransformation events by means of liquid chromatography paired with optical detection or with mass spectrometry. To date, nucleotide analogs have largely been separated using ion pairing reagents, like tributylamine. This serves to improve the retention of the hydrophilic, acidic analytes, and it suppresses problematic metal adsorption-based sample losses. On the other hand, a strong ion pairing reagents, like tributylamine, can suppress ionization and make it a challenge to switch back to other LC-MS techniques.

Ultimately though, there remains a need for quicker turnaround in these assays and for them to be made more reliable and robust. For example, phospho prodrugs and their metabolites interact with metal components, which leads to known challenges (e.g., secondary interactions) in their separation and analysis by liquid chromatography. The desire to have high pressure capable chromatographic systems with minimal dispersion has required that flow paths decrease in diameter and be able to withstand increasingly high pressures at increasingly fast flow rates. As a result, the material of choice for chromatographic flow paths is often metallic in nature. This is despite the fact that characteristics of certain analytes, for example, biomolecules, proteins, glycans, peptides, oligonucleotides, anionic metabolites, and zwitterions like amino acids and neurotransmitters, are known to have unfavorable interactions, so called chromatographic secondary interactions, with metallic surfaces.

The proposed mechanism for metal specific binding interactions requires an understanding of the Lewis theory of acid-base chemistry. Pure metals and metal alloys (along with their corresponding oxide layers) have terminal metal atoms that have characteristics of a Lewis acid. More simply, these metal atoms show a propensity to accept donor electrons. This propensity is even more pronounced with any surface metal ions bearing a positive charge. Analytes with sufficient Lewis base characteristics (any substance that can donate non-bonding electrons) can potentially adsorb to these sites and thus form problematic non-covalent complexes. It is these substances that are defined as metal-interacting analytes.

For example, analytes having phosphate groups are excellent polydentate ligands capable of high affinity metal chelation. This interaction causes phosphorylated species to bind to the flow path metals thus reducing the detected amounts of such species, a particularly troublesome effect given that phosphorylated species are frequently the most important analytes of an assay. To make the detection and monitoring of phosphor prodrugs and their active metabolites more reliable and robust, secondary interactions with the metallic chromatographic surfaces have to be accounted for.

In addition, there is a need for achieving greater selectivity for the detection and quantification of a prodrug and its phosphorylated metabolites.

Ongoing efforts to the secondary chromatographic interactions of analytes with metal chromatographic surfaces in an effort to facilitate chromatographic separation having higher resolutions are therefore needed, especially in critical pharmacokinetic and pharmacodynamic profiles and prodrug treatment development methods.

### Summary

The present invention relates to a method for detecting remdesivir in a sample according to claim 1, and to a kit for analyzing a plasma sample including remdesivir according to claim 10. The invention is defined in the appended claims.

In general, the present technology relates to methods for the LC-based detection and/or quantitation of phospho prodrugs and their active metabolites (e.g., phosphorylated metabolites) through the advantageous use of vapor deposition coated LC surfaces. In some embodiments, the active metabolites of the phosphor prodrug results in the inhibition of transcription of RNA, which may be useful for treating viruses within mammalians.

The present technology can also feature methods and devices that allow for improved detection and/or quantification of a phosphor prodrug, such as, for example, remdesivir. The present technology can also be used for the detection and quantification of remdesivir and its phosphorylated metabolites. That is, the present technology can be used to determine the presence and/or concentration of remdesivir and its active metabolites present in a sample. The present technology uses a combination of an alkylsilyl coating along at least some portions of a wetted fluid path through a chromatographic device in combination with using a mixed-mode stationary phase. As a result of this combination, an ion pairing reagent need not be used in the separation allowing for better (e.g., higher resolution or separation) or faster, easier to utilize detectors, such as optical detectors to be incorporated in the methods. An ion pairing reagent is a base, not including ammonium, that contains one or more C2 to C18 containing substituents and is cationic under the conditions of the mobile phase. Example ion pairing reagents for the active metabolites of a polymerase inhibitor include but are not limited to triethyl amine, diisopropylethyl amine, octylamine, ethyl amine, butylamine, tributylamine, or isopropylamine.

A polymerase inhibitor is a drug that acts against viruses by interfering with the action of enzymes viruses use to replicate (e.g., build up their own genetic material). A prodrug is a drug that is in an inactive form when administered to a patient/subject, but is converted in vivo (e.g., in the blood) to an active compound. In one instance, the conversion to an active compound is the result of an anabolic reaction to create or build up one or more metabolites. In another instance, the conversion to an active compound involves the release of the active compound from the prodrug in vivo, a catabolic reaction. In some instances, both catabolic and anabolic processes occur during the in vivo conversion of the prodrug to one or more active compounds.

Fast and reliable studies are needed in the fight against viruses such as SARS-CoV-2. To prevent the loss of data (e.g., prevent loss of analyte due to secondary interactions with metallic components) and to improve the resolution and peak shape so as to provide reliable quantitation of phosphor prodrugs and their active metabolites within a mammalian plasma sample, the present technology utilizes LC equipment having a vapor deposited alkylsilyl (e.g., C2, C2C10) coating on all metallic wetted surfaces within an LC system. The vapor deposited alkylsilyl coating creates low bind surfaces (LBS) to eliminate the challenges faced with metal-sensitive analytes.

The present technology includes a coating, such as alkylsilyl coating, that can provide a LBS to increase analyte recovery, sensitivity, as well as reproducibility by minimizing the analyte/surface interactions that can lead to sample losses. For example, a chromatographic column, and other LC components both upstream and downstream of the column, incorporate the coating of the present disclosure. In the present disclosure, metal sensitive compounds, such as phospho prodrugs and their active biological metabolites (e.g., polymerase inhibitors) were tested using a conventional uncoated LC system hardware, a coated column, and a LC system including a coated flow path (i.e., coated column, coated hardware both upstream and downstream of the coated column). Methods of quantitation are greatly improved (e.g., separation and peak height/shape) in the analysis of phospho prodrugs and their metabolites contained in a single mammalian (e.g., human, monkey, etc.) plasma sample.

Non-specific binding of phosphorylated compounds within chromatographic systems negatively impacts the ability to detect and accurately quantify these molecules. The mechanism of non-specific binding is due to the interaction of the analyte with metallic surfaces in the flow path. This unwanted interaction leads to a reduced amount of analyte detected, reduced repeatability of analysis, and inaccurate quantitation. Secondary interaction challenges become especially pronounced at lower concentrations where the percentage of analyte that is bound to the surface is very high relative to the total concentration and/or when active metabolite peaks overlap.

Existing techniques to mitigate these interactions, such as system passivation with nitric acid, are time consuming and only produce temporary performance gains. It is difficult to determine when the system is fully passivated and ready to operate. If attempts are made to obtain data for quantitative studies before full passivation is reached, the lower end of the curve would not be detected because the analyte still has metallic surfaces it can bind to. In the present technology, coating of the metallic surfaces defining the flow path offers demonstrably better chromatographic peak area.

For example, an alkylsilyl coating (e.g., C2 coating, C2C10 coating) on the surface area defining the flow path of a chromatographic system can minimize the interactions between phosphorylated compounds (including multi-phosphorylated compounds) and the metallic surfaces of chromatographic flow paths. Consequently, the coated metallic surfaces improve liquid chromatography separations for phosphorylated compounds - including the separation of multiple phosphorylated compounds as in the case of a phosphor drug and its active metabolites in a blood sample. The use of alkylsilyl coatings on metal flow paths allows the use of metal chromatographic flow paths, which are able to withstand high pressures at fast flow rates, while minimizing the secondary chromatographic interactions between phosphorylated compounds and the metal. These components made of high pressure material and modified with a coating can be tailored so that the internal flow paths reduce secondary chromatographic interactions. The coating covers the metallic surfaces that are exposed to the fluidic path.

In one aspect, the technology is directed to a method of detecting remdesivir in a sample. The method includes: providing the sample to a chromatography column housing a mixed-mode stationary phase disposed therein, the chromatography column comprising an alkylsilyl coating covering at least a portion of wetted internal surfaces of the chromatography column; separating and eluting remdesivir from the sample by applying a gradient of a mobile phase solution comprising ammonium acetate; and detecting remdesivir in the eluent using a mass spectrometry detector or an optical detector. The alkylsilyl coating can include or be formed of bis(trichlorosilyl)ethane or bis(trimethoxysilyl)ethane.

The above aspect can include one or more of the following features. In some embodiments, the mobile phase solution does not include an ion pairing reagent. In certain embodiment the mobile phase solution has a pH within the range of 4.8 to 7, such as 5, or 6.8. In certain embodiments, the method further includes detecting one or more metabolites of remdesivir (e.g., phosphorylated metabolites) in the eluent using the mass spectrometry detector or the optical detector. The gradient can be a linear gradient. In some embodiments, the gradient is achieved by varying a concentration of ammonium acetate. In certain embodiments, the gradient is achieved by varying concentration of acetonitrile in the mobile phase solution. In certain embodiment the concentration of acetonitrile ranges from 0 to 60 volume percent.

In another aspect which is not part of the present invention, the technology is directed to a chromatography column for analyzing a sample including a phospho prodrug. The column includes a metal body having internal surfaces defining a flow path from an inlet to an outlet of the column; a mixed-mode stationary phase having a reverse phase/anion-exchange mixed mode chemistry, the mixed-mode stationary phase is housed within the flow path, distinct from the metal body, and secured within the metal body with at least one frit; and an alkylsilyl coating covering the at least one frit.

The above aspect (which is not part of the present invention) can include one or more of the following features. The alkylsilyl coating can cover not just the at least one frit, but also can extend along a portion of body wells between the inlet and the outlet (e.g., interior surfaces of the column defined by the metal body). In some embodiments, the alkylsilyl coating includes or is formed of bis(trichlorosilyl)ethane or bis(trimetheoxysilyl)ethane.

In another aspect which is not part of the present invention, the technology is directed to a kit for analyzing remdesivir in a sample. The kit can be used to analyze remdesivir by itself in a sample, or in some instances to separate and analyze remdesivir and its phosphorylated metabolites from a sample. The kit includes a chromatography column having an alkylsily coating and a mixed-mode stationary phase (e.g., the chromatography column described above) and a vial or container of ammonium acetate or ammonium acetate solution.

The above aspect (which is not part of the present invention) can include one or more of the following features. The ammonium acetate solution can have a pH between 4.8 and 7, such as for example, 4.8, 5, 6.8 or 7. In some embodiments, the kit further includes instructions for separating and eluting a sample including remdesivir. In some embodiments, the instructions provide for a gradient separation and elution of remdesivir from the sample. The instructions may also provide information on detecting using a mass-spectrometry detector or a UV (optical) detector of the separated and eluted remdesivir and/or one or more of its phosphorylated metabolites. In some embodiments, the ammonium acetate solution is free of (e.g., does not contain) an ion pairing reagent.

In another aspect, the technology is directed to a kit for analyzing a plasma sample including a phosphor prodrug. The kit includes an alkylsilyl coated filter plate including a plurality of wells; a chromatography column comprising (i) a metal body having internal surfaces defining a flow path from an inlet to an outlet of the column, at least a portion of the internal surfaces of the metal body having an anlylsily coating deposited thereon, and (ii) a mixed-mode stationary phase having a reverse phase/anion-exchange mixed mode chemistry, the mixed-mode stationary phase housed within the flow path, and distinct from the metal body; and a vial of buffer (e.g., formic acid). The kit can further include a container of an internal standard. In some embodiments, the kit can also include blood/plasma collection vessels.

The above aspects and features of the present technology provide numerous advantages over the prior art. For example, by utilizing a vapor deposited coated LC system in the analysis of phospho prodrugs and their active metabolites, accurate quantitation of the prodrug and its active metabolites can be achieved than by conventional methods. This information is crucial for obtaining pharmacokinetic and pharmacodynamic profiles and for developing successful treatment in the fight against viruses. Accurate and reliable quantification of the phospho prodrug (and in some instances, its active metabolites from a blood sample) can be used for impurity testing and lot releasing testing.

### Brief Description of the Drawings

The technology will be more fully understood from the following detailed description taken in conjunction with the accompanying drawings, in which:

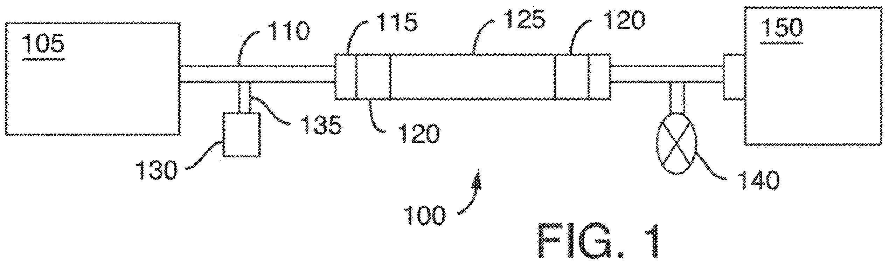

**FIG. 1** is a schematic of a chromatographic flow system including a chromatography column and various other components, in accordance with an illustrative embodiment of the technology. A fluid is carried through the chromatographic flow system with a fluidic flow path extending from a fluid manager to a detector, such as a MS detector.

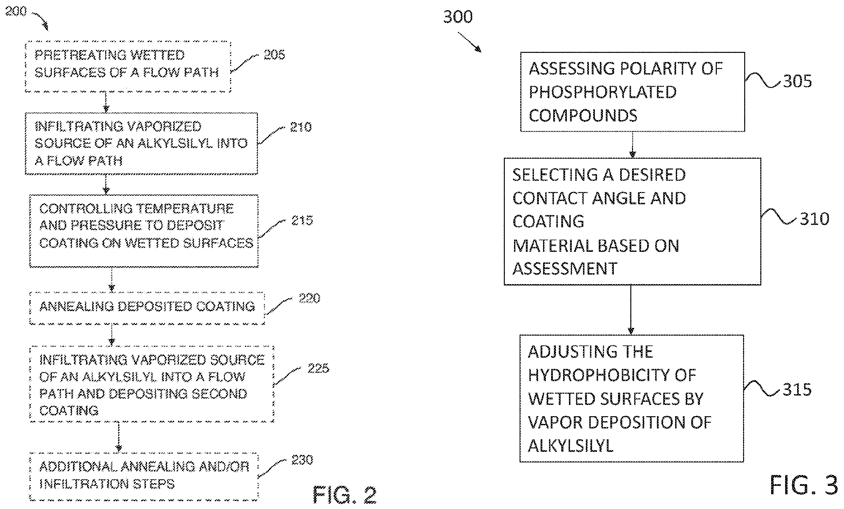

**FIG. 2** is a flow chart of a method of coating a fluidic path (such as a fluidic path in a chromatography system) according to an illustrative embodiment of the technology.
**FIG. 3** is a flow chart showing a method of tailoring a fluidic flow path for separation of a sample including a biomolecule, in accordance with an illustrative embodiment of the technology.

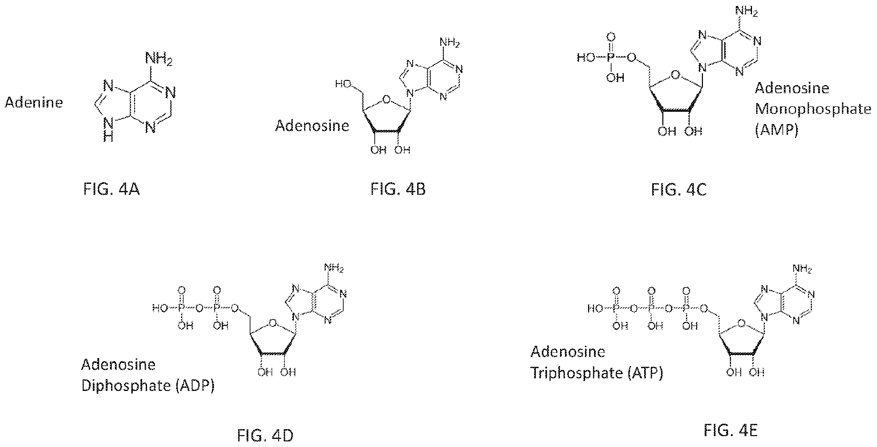

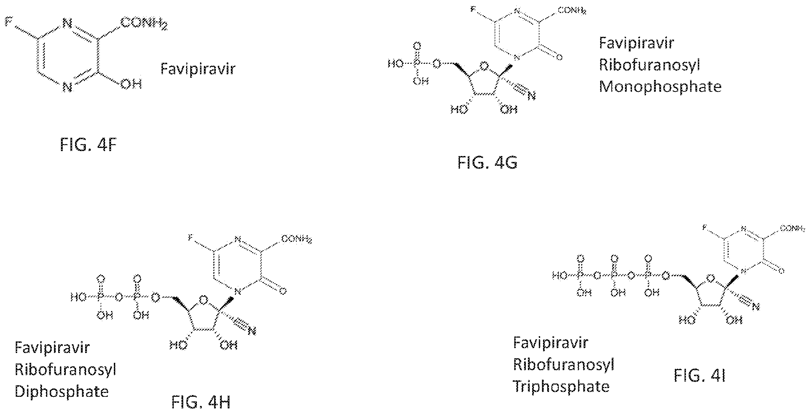

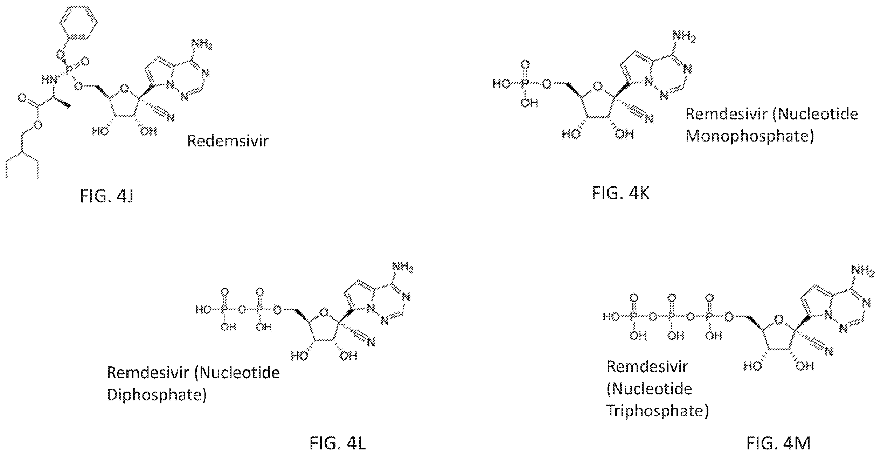

**FIGs. 4A-4M** illustrate the chemical formulae of various prodrugs and their metabolites. **FIGs. 4A-4E** illustrate nucleobase adenine and its nucleoside and nucleotide analogs. Specifically, **FIG. 4A** is adenine, **FIG. 4B** is adenosine, **FIG. 4C** is adenosine monophosphate, **FIG. 4D** is adenosine diphosphate, and **FIG. 4E** is adenosine triphosphate. **FIGs. 4F-4I** illustrate favipiravir (an antiviral polymerase inhibitor) and its metabolites. Specifically, **FIG. 4F** is favipiravir, **FIG. 4G** is favipiravir ribofuranosyl monophosphate, **FIG. 4H** is favipiravir ribofuranosyl diphosphate; and **FIG. 4I** is favipiravir ribofuranosyl triphosphate. FIGs. **4J-4M** illustrate remdesivir and its phosphorylated metabolites. Specifically, **FIG. 4J** **is** remdesivir, **FIG. 4K** is remdesivir nucleotide monophosphate (RMP); **FIG. 4L** is remdesivir nucleotide diphosphate (RDP) and **FIG. 4M** is remdesivir nucleotide triphosphate (RTP).

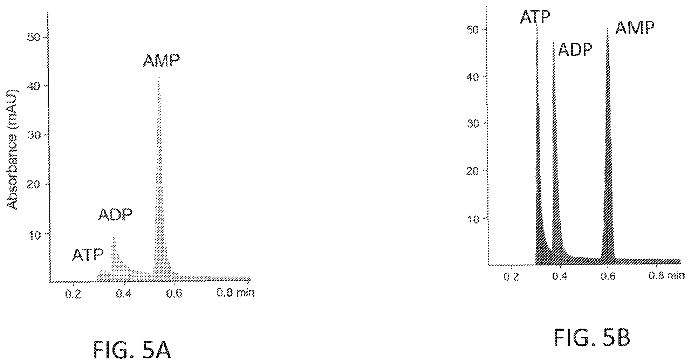

**FIGs. 5A and 5B** provide a comparison of separation results between three metabolites of adenosine (AMP, ADP, ATP) as separated using standard uncoated technology versus coating technology of the present disclosure. Ten sequential injections of the mixture (100 ng of each analyte) were introduced to each column. **FIG. 5A** provides a chromatogram from a standard (uncoated) column from the 5^{th} injection and **FIG. 5B** provides a chromatogram from a C2 coated chromatographic column also from the 5^{th} injection.

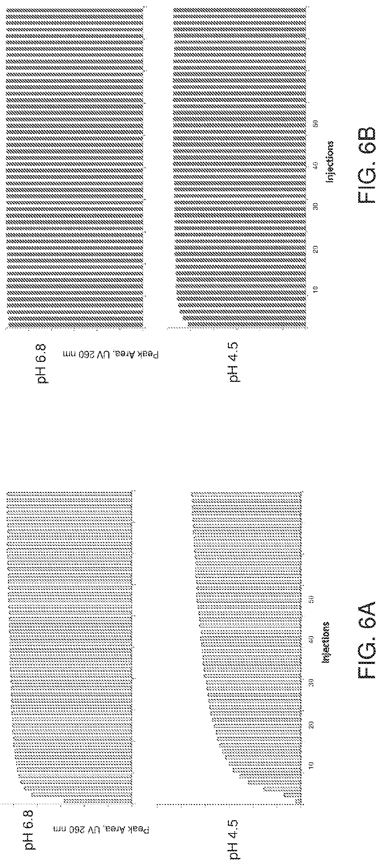

**FIG. 6A** graphs ATP recovery results from a standard uncoated chromatographic system as a function of mobile phase pH and number of repeat injections.
**FIG. 6B** graphs ATP recovery results from a C2 coated chromatographic system in accordance with the present technology as a function of mobile phase pH and number of repeat injections.

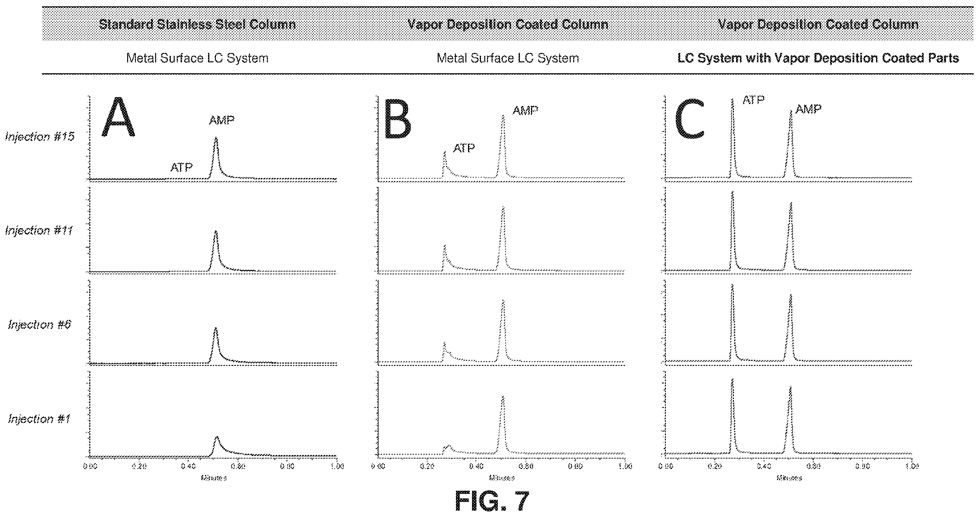

**FIG. 7** provides chromatograms illustrating the chromatographic performance for metal sensitive analytes (ATP and AMP) on three different systems. In column A, results are provided for a standard, uncoated stainless steel column. In column B, results are provided for a C2 coated column, however chromatographic components both upstream and downstream of the column remained uncoated. In column C, results are provided for a C2 coated column in a C2 coated chromatographic system.

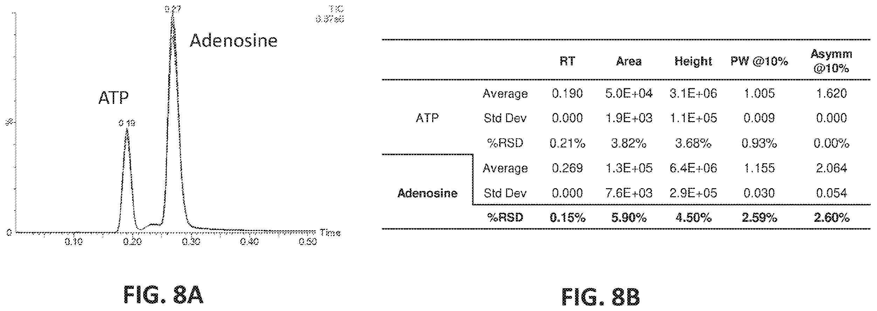

**FIGs. 8A and 8B** provide LC-MS results of ATP and the prodrug adenosine using vapor deposition coated LC surfaces (C2 coated surfaces) and SRMs with a QqQ mass spectrometer. Repeat injections of 1 µL injections of 400 pg ATP and 195 pg adenosine were used. The results are shown in a chromatograph in **FIG. 8A** and in table form in **FIG. 8B****.**

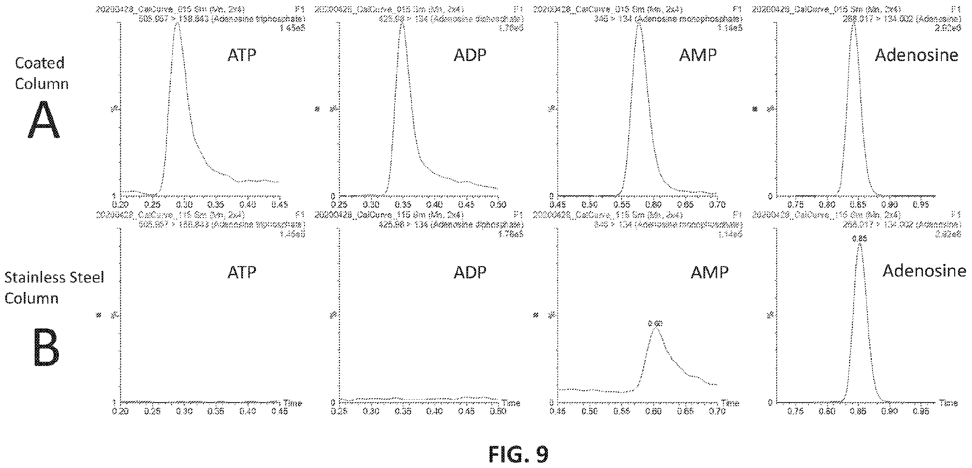

**FIG. 9** provides chromatograms of each of ATP, ADP, AMP, and adenosine at 50 pg/µL x 1.0 µL injections, using coated columns (top row, labeled A) versus uncoated stainless steel columns (bottom row, labeled B).

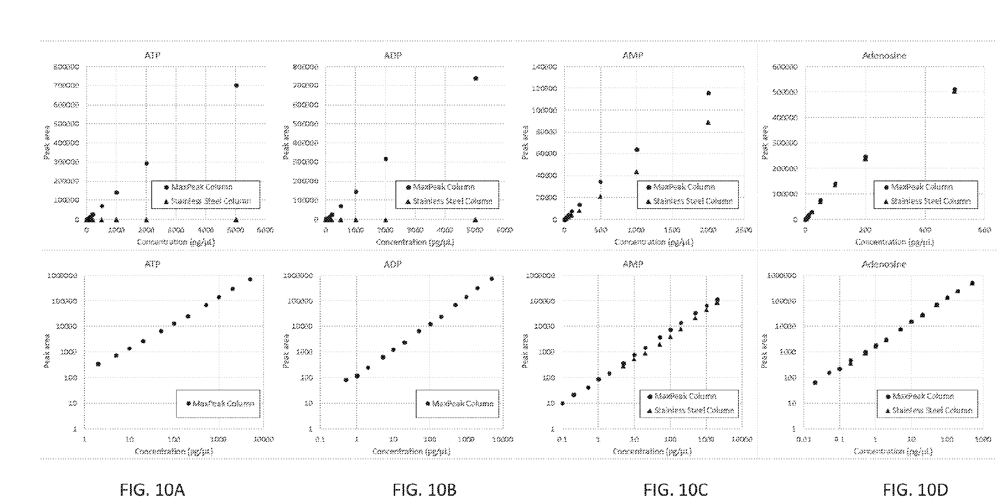

**FIGs. 10A-10D** provide calibration curves for ATP, ADP, AMP and adenosine obtained using coated versus stainless steel (uncoated) column technology. The top row presents the data on a linear scale, whereas the bottom row presents the data on a log scale. **FIG. 10A** provides the curves for ATP; **FIG. 10B** provides the curves for ADP; **FIG. 10C** provides the curves for AMP; and **FIG. 10D** provides the curves for adenosine.

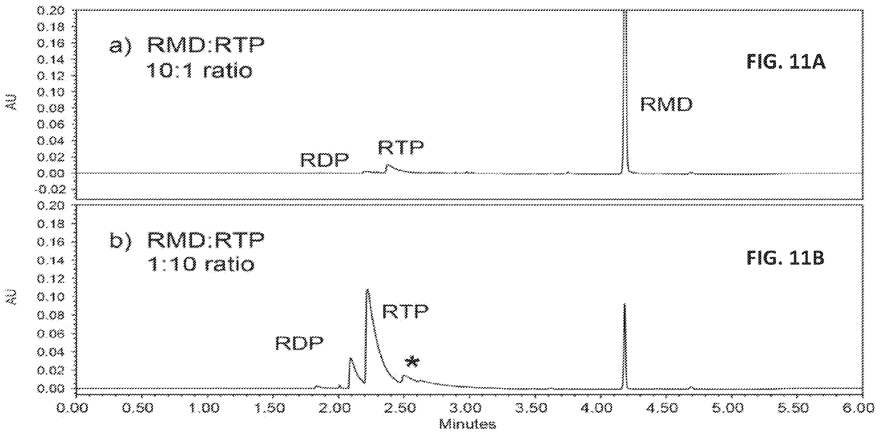

**FIG. 11** **A** is a LC-UV chromatograph comparing a 10:1 ratio of remdesivir (RMD) to remdesivir nucleoside triphosphate (RTP) using a 4 minute gradient. The presence of remdesivir nucleotide diphosphate is shown as (RDP)). **FIG. 11B** is also a LC-UV chromatograph comparing a 1:10 ratio of RMD to RTP. The asterisk (*) in FIG. 11B denotes an unknown presence in sample S2.

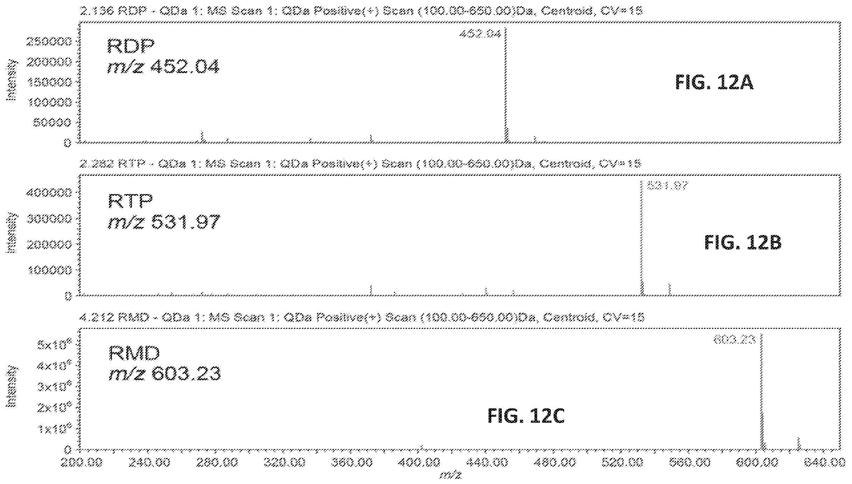

**FIG. 12A** illustrates the peak identification of RDP using a Acquity QDa Mass Detector. **FIG. 12B** illustrates the peak identification of RTP using a Acquity QDa Mass Detector. **FIG. 12** **C** illustrates the peak identification of RMD using a Acquity QDa Mass Detector.

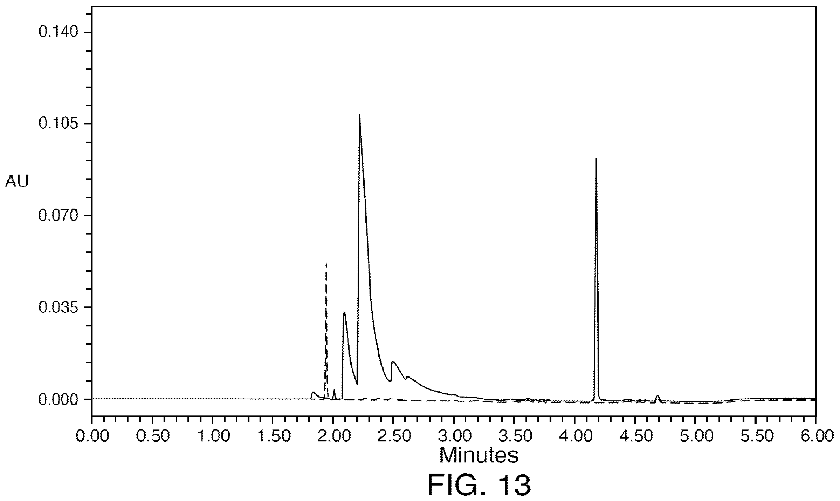

**FIG. 13** provides an overlay of remdesivir nucleoside (dashed trace) with RMD and RTP 1:10 concentration ratio (solid trace) using the 4 minute gradient.

### Detailed Description

Polymerase inhibitors, due to their ability to disrupt virus replication in the body, are an important part in the fight against novel viruses, such as SARS-CoV-2. A number of polymerase inhibitors are prodrugs that are converted into the active form in vivo. Two such drugs include favipiravir and remdesivir, which both are phospho prodrugs. The active forms of these prodrugs result from anabolic processes to attach phosphate groups. In the case, of remdesivir, the active form created in vivo results from a catabolic first step to remove a portion of the prodrug followed by anabolic processes to attach the phosphate groups. In order to develop treatment methods using one or more of these prodrugs, pharmacokinetic and pharmacodynamic profiles, generated through the sensitive analysis of a mammalian subject's plasma must be developed and vetted. However, the phosphorylated compounds residing in the active metabolites (i.e., phosphorylated metabolites) present quantitation and analysis challenges due to secondary interactions arising from metallic chromatographic components. Further, ion pairing reagents typically used with mixed-mode separation media can add to resolution and analysis challenges.

In general, the present disclosure is related to coating columns (and other chromatographic hardware) with low-binding surfaces to increase analyte recovery, reproducibility and sensitivity by minimizing negative analyte/surface interactions that can lead to sample losses. Coated columns in accordance with an embodiment of the present technology are available under the tradename of MaxPeak^{™} (Waters Corporation, Milford, MA). The present disclosure addresses the problematic binding of compounds on metallic surfaces of chromatographic systems. For example, phosphorylated compounds can interact with stainless steel to reduce analyte recovery and that this interaction can increase with the number of phosphorylated moieties present.

In addition, coating the system to have LBS minimizes uncertainty of the chromatographic system performance. Permanent passivation (or at least semi-permanent passivation, i.e., useable lifetime of a consumable) can be provided by the coating the column and surrounding chromatographic hardware. For example, the system does not need to be passivated after each wash, and passivation does not effectively diminish after each wash or flowing. Consequently, the analyte detected using LC/MS or LC/UV can be depended upon as an accurate assessment of the analyte present.

One method of coating for LBS is the use of alkylsilyl coatings (e.g., a vapor deposited C2 coating, a vapor deposited C2C10 coating). In some aspects, the alkylsilyl coating acts as a bioinert, low-bind coating to modify a flow path to address flow path interactions with an analyte, such as a metal-sensitive analyte. That is, the bioinert, low-bind coating minimizes surface reactions with the metal interacting compounds and allows the sample to pass along a flow path without clogging, attaching to surfaces, or change in analyte properties. The reduction/elimination of these interactions is advantageous because it allows for accurate quantitation and analysis of a sample containing phosphorylated compounds or other metal-sensitive compounds. Further, for samples with low concentrations of analyte, MS detection is possible. The coating which creates LBS along the flow path prevents/significantly minimizes analyte loss to the metallic surface walls, thereby allowing low concentration of analytes to be detected.

FIG. 1 is a representative schematic of a chromatographic flow system/device 100 that can be used to separate analytes, such as phosphorylated compounds (e.g., metabolites in a blood sample taken from a mammalian subject who was administered a phosphor prodrug). Chromatographic flow system 100 includes several components including a fluid manager system 105 (e.g., controls mobile phase flow through the system), tubing 110 (which could also be replaced or used together with micro fabricated fluid conduits), fluid connectors 115 (e.g., fluidic caps), frits 120, a chromatography column 125, a sample injector 135 including a needle (not shown) to insert or inject the sample into the mobile phase, a vial, sinker, or sample reservoir 130 for holding the sample prior to injection, a detector 150, such as a mass spectrometer, and a pressure regulator 140 for controlling pressure of the flow. Interior surfaces of the components of the chromatographic system/device form a fluidic flow path that has wetted surfaces. The fluidic flow path can have a length to diameter ratio of at least 20, at least 25, at least 30, at least 35 or at least 40.

At least a portion of the wetted surfaces can be LBS by coating with an alkylsilyl coating to reduce secondary interactions by tailoring hydrophobicity. The coating can be applied by vapor deposition. As such, methods and devices of the present technology provide the advantage of being able to use high pressure resistant materials (e.g., stainless steel) for the creation of the flow system, but also being able to tailor the wetted surfaces of the fluidic flow path to provide the appropriate hydrophobicity so deleterious interactions or undesirable chemical effects on the sample can be minimized. In some examples, the coating of the flow path is non-binding with respect to the analyte, such as a metal-sensitive compound (e.g., a phosphorylated compound, a pharmaceutical drug, biological active metabolite). Consequently, the analyte, such as phosphorylated compounds, does not bind to the coating of the flow path.

The alkylsilyl coating can be provided throughout the system from the tubing or fluid conduits 110 extending from the fluid manager system 105 all the way through to the detector 150. The coatings can also be applied to portions of the fluidic fluid path (e.g., at least a portion of the fluidic path). That is, one may choose to coat one or more components or portions of a component and not the entire fluidic path. For example, the internal portions of the column 125 and its frits 120 and end caps 115 can be coated whereas the remainder of the flow path can be left unmodified. Further, removable/replaceable components can be coated. For example, the vial or sinker 130 containing the sample reservoir can be coated as well as frits 120.

In one aspect, the flow path of the fluidic systems described herein is defined at least in part by an interior surface of tubing. In another aspect, the flow path of the fluidic systems described herein is defined at least in part by an interior surface of microfabricated fluid conduits. In another aspect, the flow path of the fluidic systems described herein is defined at least in part by an interior surface of a column. In another aspect, the flow path of the fluidic systems described herein is defined at least in part by passageways through a frit. In another aspect, the flow path of the fluidic systems described herein is defined at least in part by an interior surface of a sample injection needle. In another aspect, the flow path of the fluidic systems described herein extends from the interior surface of a sample injection needle throughout the interior surface of a column. In another aspect, the flow path extends from a sample reservoir container (e.g., sinker) disposed upstream of and in fluidic communication with the interior surface of a sample injection needle throughout the fluidic system to a connector/port to a detector.

In some embodiments, only the wetted surfaces of the chromatographic column and the components located upstream of the chromatographic column are LBS. coated with the alkylsilyl coatings described herein, while wetted surfaces located downstream of the column are not coated. In other embodiments, components both the upstream and downstream of the column (and including the column) are coated. The coating can be applied to the wetted surfaces via vapor deposition. Similarly, the "wetted surfaces" of labware or other fluid processing devices may benefit from alkylsilyl coatings described herein. The "wetted surfaces" of these devices not only include the fluidic flow path, but also elements that reside within the fluidic flow path. For example, frits and/or membranes within a solid phase extraction device come in contact with fluidic samples. As a result, not only the internal walls within a solid phase extraction device, but also any frits/membranes are included within the scope of "wetted surfaces." All "wetted surfaces" or at least some portion of the "wetted surfaces" can be improved or tailored for a particular analysis or procedure by including one or more of the coatings described herein. The term "wetted surfaces" refers to all surfaces within a separation device (e.g., chromatography column, chromatography injection system, chromatography fluid handling system, frit, etc.). The term can also apply to surfaces within labware or other sample preparation devices (e.g., extraction devices, protein precipitation devices) that come into contact with a fluid, especially a fluid containing an analyte of interest.

Further information regarding the coating and the deposition of coatings in accordance with the present technology is available in US 2019/0086371.

In some examples, coating the flow path includes uniformly distributing the coating about the flow path, such that the walls defining the flow path are entirely coated. In some embodiments, uniformly distributing the coating can provide a uniform thickness of the coating about the flow path. In general, the coating uniformly covers the wetted surfaces such that there are no "bare" or uncoated spots.

In certain embodiments, the coating is applied and covers just one or more of the frits. That is, the coating need not cover the walls within the body that houses the stationary phase. Rather, the coating could instead be positioned just on one or more of the frits that retain the stationary phase in the housing. The frits provide a large percentage of the wetted fluid path. As a result, in some instances, coating just one or both of the frits is enough to provide the advantage.

Commercially available vapor deposition coatings can be used in the disclosed systems, devices, and methods, including but not limited to vapor deposited coatings provided under the trademarks Dursan^{®} and Dursox^{®} (commercially available from SilcoTek Corporation, Bellefonte, PA).

The coatings described above can be used to create LBS and can tailor a fluidic flow path (or a portion thereof, e.g., frits) of a chromatography system for the separation of a sample. The coatings can be vapor deposited. In general, the deposited coatings can be used to adjust the hydrophobicity of internal surfaces of the fluidic flow path that come into contact with a fluid (i.e. wetted surfaces or surfaces coming into contact with the mobile phase and/or sample/analyte). By coating wetted surfaces of one or more components of a flow path within a chromatography system, a user can tailor the wetted surfaces to provide a desired interaction (i.e., a lack of interaction) between the flow path and fluids therein (including any sample, such as a sample containing phosphorylated compound, within the fluid).

FIG. 2 is a flow chart illustrating method 200 for creating a LBS by tailoring a fluidic flow path for separation of a sample including phosphorylated compounds. The method has certain steps which are optional as indicated by the dashed outline surrounding a particular step. Method 200 can start with a pretreatment step (205) for cleaning and/or preparing a flow path within a component for tailoring. Pretreatment step **205** can include cleaning the flow path with plasma, such as oxygen plasma. This pretreatment step is optional.

Next, an infiltration step **(210)** is initiated. A vaporized source of an alkylsilyl compound (e.g., C2) is infiltrated into the flow path. The vaporized source is free to travel throughout and along the internal surfaces of the flow path. Temperature and/or pressure is controlled during infiltration such that the vaporized source is allowed to permeate throughout the internal flow path and to deposit a coating from the vaporized source on the exposed surface (e.g., wetted surfaces) of the flow path as shown in step **215.** Additional steps can be taken to further tailor the flow path. For example, after the coating is deposited, it can be heat treated or annealed (step **220)** to create cross linking within the deposited coating and/or to adjust the contact angle or hydrophobicity of the coating. Additionally or alternatively, a second coating of alkylsilyl compound (having the same or different form) can be deposited by infiltrating a vaporized source into the flow path and depositing a second or additional layers in contact with the first deposited layer as shown in step **225.** After the deposition of each coating layer, an annealing step can occur. Numerous infiltration and annealing steps can be provided to tailor the flow path accordingly (step **230).**

**FIG. 3** provides a flow chart illustrating a method **(300)** of creating a LBS by tailoring a fluidic flow path for separation of a sample including a analyte, such as phosphorylated compounds. The method can be used to tailor a flow system for use in isolating, separating, and/or analyzing phosphorylated compounds. In step **305,** phosphorylated compounds are assessed to determine polarity. Understanding the polarity will allow an operator to select (by either look up table or make a determination) a desired coating chemistry and, optionally, contact angle as shown in step **310.**

In some embodiments, in addition to assessing the polarity of phosphorylated compounds, the polarity of a stationary phase to be used to separate the phosphorylated compounds (e.g., stationary phase to be included in at least a portion of the fluidic flow path) is also assessed. A chromatographic media (e.g., stationary phase) can be selected based on metal-sensitive compounds or phosphorylated compounds in the sample. Understanding the polarity of both the phosphorylated and/or metal-sensitive compounds and the stationary phase is used in certain embodiments by the operator to select the desired coating chemistry and contact angle in step **310.** The components to be tailored can then be positioned within a chemical infiltration system with environmental control (e.g., pressure, atmosphere, temperature, etc.) and precursor materials are infiltrated into the flow path of the component to deposit one or more coatings along the wetted surfaces to adjust the hydrophobicity as shown in step **315.** During any one of infiltration, deposition, and condition steps (e.g. annealing), coatings deposited from the infiltration system can be monitored and if necessary precursors and or depositing conditions can be adjusted if required allowing for fine tuning of coating properties.

The coated chromatographic hardware is utilized in the present technology to analyze a phospho prodrug and its biological metabolites (including the active metabolites) in a plasma sample. That is, the coated chromatographic hardware of the present technology is utilized to separate and analyze the phosphorylated compounds (e.g., the biological metabolites as well as prodrug remainder) in a mammalian subject's plasma or blood sample. The information uncovered in the analysis allows of the quantitation of the phosphorylated compounds and can be used in pharmacokinetic and pharmacodynamics studies. Further, this information can be used for determination of dosing regiments and in diagnostic dosing testing for a particular patient. Further, accurate information regarding the phosphor prodrug can be used for impurity testing and lot release testing which will be needed for large scale production.

Two phospho prodrugs that have been classified as polymerase inhibitors (antiviral polymerase inhibitors) include favipiravir and remdesivir. As shown in **FIG. 4F****,** favipiravir, when administered to a mammalian subject forms at least three metabolites, favipiravir ribofuranosyl monophosphate **(****FIG. 4G****),** favipiravir ribofuransoyl disphosphate (**FIG. 4H****),** and favripiravir ribofuranosyl triphosphate **(****FIG. 4I**). The favipiravir metabolites are formed by an anabolic process to build the phosphate groups. Shown in **FIG. 4J** is another antiviral polymerase inhibitor remdesivir. Remdesivir also has three phosphorylated metabolites. However, unlike favripiravir, remdesivir undergoes a catabolic process to remove the left hand portion of the prodrug prior to building the phosphate groups remdesivir nucleotide monophosphate **(****FIG. 4K****),** remdesivir nucleotide diphosphate **(****FIG. 4L****),** and remdesivir nucleotide triphosphate **(****FIG. 4M****).**

Remdesivir is an investigational small-molecule antiviral drug that has demonstrated activity against RNA viruses in several virus families, including coronaviruses. Remdesivir is a prodrug of a nucleoside, both of which are metabolized intracellularly into the active nucleoside triphosphate. Originally, this prodrug was developed to treat Ebola virus infection. Currently, remdesivir has been the focus of extensive research on repurposing antiviral medications to be used alone or in combination with other therapeutics for the treatment of the SARS-CoV-2 infection.

One challenge that was anticipated in the separation of remdesivir and its active metabolites was the retention and peak shape of the nucleoside triphosphate **(****FIG. 4M****).** While separations have been achieved using ion pairing reagents and HILIC mode chromatography, the present technology focuses on the use of mixed-mode chromatography with ammonium acetate buffers to achieve a simple, fast analysis that can be used with either optical or MS detectors.

Mixed-mode chromatography achieves analyte separation by utilizing multiple types of interactions between the stationary-phase and the analytes. Mobile phase pH, ionic strength and organic content are all factors that can influence the retention and selectivity of analytes. Waters Corporation, Milford, MA, USA sells a column with a mixed mode stationary phase that is a reversed-phase/anion-exchange stationary phase based on bridged-ethyl hybrid particles (Atlantis BEH C18 AX stationary phase column). The utilization of bridged-ethyl particles allows for the use of a wide range of mobile phase pH values and the presence of both C18 and anion-exchange groups provides the ability to separate analytes based on either their hydrophobic or ionic characteristics. Additionally, Atlantis BEH C18 AX stationary-phase is the first chromatographic material that has been packed using LBS technology, designed to reduce acidic analyte interactions by incorporating the alkylsilyl coating on one or more internal stainless steel surfaces.

The methods of the present invention are useful for studying and quantifying other phospho prodrugs, not just polymerase inhibitors. **FIGs. 4A-4E** show the metabolites formed in vivo from adenine **(****FIG. 4A****)** or adenosine **(****FIG. 4B****).** The three phosphorylated metabolites include adenosine monophosphate (AMP)(see **FIG. 4C****),** adenosine diphosphate (ADP)(see **FIG. 4D**), and adenosine triphosphate (ATP)(see **FIG. 4E****).** ADP and ATP provide energy for metabolic processes and prodrugs aimed at helping to increase energy and metabolic processes for compromised (e.g., cancer) patients are in development.

Separations of adenosine triphosphate ATP were investigated to demonstrate the utility of vapor deposition coated flowpaths to the enhance the LC based analysis of polymerase inhibitors, nucleotides, and nucleotide analogs. Applied to LC columns, the vapor deposition coatings of this invention offers improvements in the separation and detection of metal-sensitive analytes. These improvements can be observed in the form of a reduced requirement for passivation/conditioning, greater recovery, improved peak symmetry, extended linearity of MS calibration curves, and higher quality mass spectra. These benefits are illustrated in **FIGs. 5A** and **5B****,** wherein chromatographic data are reported that were obtained from a series of injections (i.e., 10 injections) of adenosine triphosphate (ATP), adenosine diphosphate (ADP) and adenosine monophosphate (AMP) on two columns. BEH C₁₈ columns using standard stainless steel versus vapor deposition coated surfaces (i.e., C2 coated surfaces) were compared. Ten sequential injections of the mixture (100 ng of each of ATP, ADP, and AMP) were injected into the 2.1 x 50 mm columns, with a 10 mM ammonium acetate (pH 6.8) mobile phase at a 30°C column temperature and a 0.5 mL/min flow rate. The results for the uncoated standard stainless steel column are presented in **FIG. 5A** and the coated column results appear in **FIG. 5B****.** Sizeable differences in recovery were observed. Notably, the vapor deposition coated column (result from 5^{th} injection shown in **FIG. 5B****)** was found to produce an accurate profile of the sample even upon its first injection. This shows that the nature of this issue lies in the standard metallic column hardware and not the BEH stationary phase.

The coated columns used to generate the comparison data, were vapor deposited with a C2 coating and are commercially available as PREMIER column with MaxPeak HPS, BEH C₁₈ columns (Waters Corporation, Milford, MA). Conditions used for the chromatography and mass spectrometry are provided in Table 1 below:

**Table 1: Reversed Phase LC-MS with QqQ Mass Spectrometric Detection of ATP and Adenosine**

| **Test Conditions** | | | | | | |
|---|---|---|---|---|---|---|
| Column | | | BEH C18 1.7µm 2.1 x 50 mm | | | |
| Sample | | | 400 pg/µL ATP (Adenosine 5'-triphosphate) disodium salt and 195 pg/µL adenosine in water | | | |
| Solvent Manager | | | | | | |
| Solvent Line A | | | 10 mM ammonium acetate, pH 6.8 in 99.8:0.2 water/Acetonitrile | | | |
| Solvent Line B | | | Acetonitrile | | | |
| Wash Solvent | | | 50:50 Water:Acetonitrile | | | |
| Purge Solvent | | | 50:50 Water:Acetonitrile | | | |
| Seal Wash Solvent | | | 50:50 Water:Acetonitrile | | | |
| Diluent | | | Water | | | |
| Flow Rate | | | 0.6 mL/min | | | |
| Sample Temperature | | | 20 ºC | | | |
| Column Temperature | | | 40 ºC, APH Enabled | | | |
| ACQUITY PREMIER FTN | | | | | | |
| Column Heater Set Temperature | | | 40 ºC | | | |
| Pre-Inject | | | 0 sec | | | |
| Post-Inject | | | 6 sec | | | |
| Needle Placement (from bottom) | | | 3 mm | | | |
| | | | ** make sure that the needle's Z-axis position is properly calibrated.* | | | |
| Xevo TQ-XS Mass Spectrometer with a tool-free ESI probe | | | | | | |
| Ion Mode | | | Negative Electrospray (ES-) | | | |
| Capillary Voltage | | | -0.5 kV* | | | |
| Desolvation Temperature | | | 600 ºC | | | |
| Desolvation Gas Flow | | | 1000 L/Hr | | | |
| Cone Gas Flow | | | 150 L/Hr | | | |
| Nebulizer Gas Pressure | | | 7.0 Bar | | | |
| Analyte SRM Conditions | | | | | | |

| | MW | Transition | | Cone Voltage (V) | Collision Energy (eV) | Dwell Time (sec) |
|---|---|---|---|---|---|---|
| Adenosine | 267.24 | 266.02 > 134.00 | | 32 | 18 | 0.022 |
| ATP | 507.18 | 505.96 > 158.84 | | 30 | 30 | 0.022 |

**FIGs. 6A and 6B** show the results of additional experiments where 50 sequential injections (100ng) of ATP and AMP were performed with an isocratic separation using a 10 mM aqueous ammonium acetate mobile phase and a temperature of 30°C. For this experiment, a previously unused standard hardware ACQUITY UPLC BEH 130 Å C₁₈ 2.1 x 50 mm column (standard, uncoated chromatography system and column, available from Waters Corporation, Milford, MA) was first tested. Low peak areas are noticeable at pH 4.5; the first injections on the unused, standard column showed nearly complete ATP loss **(****FIG. 6A****).** In the subsequent injections, peak area gradually increased, suggesting that the metallic column hardware could be partially, yet not fully, passivated. Peak areas never reached a point corresponding to full recovery even after 50 injections. **FIG. 6A** also shows results from experiments with pH 6.8 mobile phase conditions. It can be seen that ATP loss decreased with an increase in pH. However, pronounced losses were still observed at pH 6.8. There is little evidence of any of this undesired behavior with a column constructed with vapor deposition coated hardware **(****FIG. 6B**). The coated column was a previously unused C2-coated BEH 130 Å C₁₈ 2.1 x 50 mm column available from Waters Corporation, Milford, MA.

To achieve optimal performance for metal-sensitive analytes, all major sources of exposure to metal surfaces and dissolved metal ions must be considered. LC hardware upstream of the column should be addressed with extra care. Many LC instruments are constructed from stainless steel components, which are susceptible to corrosion - either with macroscopic visibility or with microscopic leachates and the formation of soluble metal ions. It is best for upstream LC hardware to therefore be constructed from corrosion resistant components. Alternatively, strong acid flushing (e.g. 30% phosphoric acid) can be incorporated into the routine maintenance of a stainless steel system to solubilize surface iron and produce a passivated layer. However, this type of procedure is harsh on instrumentation, and the passivation can be short-lived. To establish an LC assay for a metal sensitive analyte, it is thus ideal to use a corrosion resistant LC system.

Moreover, one must consider potential sites where a sample might adsorb within the LC. The use of vapor deposition coated surfaces should thus also be extended from column hardware to the components of the LC instrument (e.g., upstream of the column, downstream of the column). The benefit of using an LC system with vapor deposition coated parts is demonstrated in **FIG. 7****.** Herein, ATP and AMP mixtures were repeatedly separated at 20 ng individual mass loads using a 10 mM ammonium acetate pH 6.8 mobile phase, 30°C column temperature and a 0.5 mL/min flow rate. Chromatograms resulting from the first, sixth, eleventh, and fifteenth runs using an LC system with metal surfaces and a standard column (uncoated stainless steel 2.1x50 mm having BEH 130 Å C₁₈ chemistry) are shown in column A (left hand side of, first column, FIG. 7). No peak could be observed for ATP, and the peak shape of AMP was found to change across the injections and to still show significant tailing for the fifteenth injection. Upon switching to a vapor deposition coated column (results shown in column B, center column of FIG. 7), a peak could be obtained for ATP, though it is seen to be incompletely recovered and negatively influenced by severe amounts of peak tailing. The column used was a C2 coated stainless steel 2.1x50 mm having BEH 130 Å C₁₈ chemistry. It was not until vapor deposition coated parts were used for both the column and the LC system that near symmetrical peak shape was achieved and that recoveries of >95% were obtained. The results for a vapor deposition coated (C2 coated) column and LC system are shown in column C, right side of FIG. 7).

In some embodiments, mobile phase purity must also be considered. While making up the mobile phase, it is advised to purchase LC-MS quality reagents that are certified by ICP testing to contain no more than ppb levels of metals. Mobile phase containers should also be chosen to avoid metal ion contamination, and metal sinker filters should not be used. In some instances, a low concentration (sub-millimolar) of chelating additive, such as citric acid, can be added to the mobile phase to mitigate any residual adsorption. Finally, depending on sample preparation protocols, some samples might contain free metal ions. Accordingly, it is foreseeable that some assays may benefit from adding chelators and/or suitable internal standards to samples. In which case, residual adsorptive sites will be transiently passivated with each sample injection. Similarly, it might even be advantageous in some instances to include a chelating additive in a sample preparation process, especially where complicated adsorption and Lewis acid-base interactions might be at play. With these considerations and the use of vapor deposition coated LC surfaces, it will become possible to reliably perform LC analyses for even the most challenging metal sensitive analytes.

In some embodiments, the mobile phase is carefully considered to minimize degradation of pyrophosphate bonds. Accordingly, solutions with relatively neutral pH values are preferred. A pH ranging from 2 to 11 can be employed, but pH values ranging from 3 to 8 are preferred, in particular, 6 to 7. In a preferred embodiment the mobile phase is comprised of volatile components to be compatible with mass spectrometric detection. Acetic acid, formic acid, ammonium hydroxide, triethyl amine, ammonium acetate, and ammonium formate are preferentially used. Chromatographic separations can be achieved by isocratic or gradient elution using reversed phase, HILIC, mixed mode or ion exchange separations. Water can be used a primary component of a mobile phase along with one or more organic modifiers, including but not limited to acetonitrile, methanol, ethanol, isopropanol, n-propanol, and THF.

In practice, vapor deposition coated LC surfaces are advantageously used to perform the bioanalysis of a dosed polymerase inhibitor and its active metabolites by increasing analyte recovery, improving dynamic range, and reducing the undesired production of metal adducted ions. FIGs. 8A and AB demonstrate an exemplary embodiment of a reversed phase separation of adenosine and its triphosphate form. In this example, repeat injections of 1 µL injections of 400pg of ATP and 195 pg of adenosine were used. The results of this example are provided in a chromatograph in **FIG. 8A** and in table form in **FIG. 8B****.** Detection is afforded by a triple quadrupole mass spectrometer and the application of single reaction monitoring. In some embodiments, multiple reaction monitoring can be employed. To prepare a sample for analysis, a patient sample (mammalian plasma, or synthetic plasma) can be directly analyzed or subjected to protein precipitation or liquid extraction. In some embodiments, the blood sample can be processed through a phospholipid or phospholipid and protein capture plate.

In a further study of adenosine and its phosphate containing biological metabolites, the effects of analyte loss in standard, uncoated column technology was investigated for each analyte. FIG. 9 shows example chromatograms - one for each of - adenosine and its phosphorylated metabolites AMP, ADP, and ATP. The chromatograms are presented from left to right for analytes having the greatest metal-sensitivity to the least. That is, the left most chromatogram is for ATP (adenosine triphosphate), the second from the left is ADP (adenosine diphosphate), the third from the left is AMP (adenosine monophosphate) and the rightmost chromatogram is adenosine. The top row chromatograms **(labeled A)** are the results from the separation and MS detection from a C2 coated column; the bottom row chromatograms **(labeled B)** are the results from the separation and MS detection from a stainless steel uncoated column. Adenosine (shown as the rightmost chromatogram in both row A and B), which is not a metal-sensitive analyte as it does not include a phosphate group, showed a little to no difference in peak area when using the stainless steel column (row B) as compared to the coated column of the present technology. AMP, which contains a metal-sensitive single phosphate group, showed a little loss in peak area when the stainless steel (uncoated) column was utilized. For ADP and ATP, which contain more metal-sensitive phosphate groups, the peaks are well defined when the C2 coated columns were used for analysis. These same peaks are completely missing from the results obtained on the stainless steel columns.

In addition to investigating the loss of analyte (thus loss of reliable quantitation), dynamic range for adenosine, AMP, ADP, and ATP was also compared between stainless steel (uncoated) columns and the coated columns of the present technology. **FIGs. 10A-10D** provides the calibration curves in both linear (above) and log (below) scale for ATP, ADP, AMP, and adenosine for each of the C2 coated column (MaxPeak Column, circles) and the stainless steel column (triangles). As the results from the stainless steel column did not show ATP and ADP, the two most metal-sensitive compounds, the log scale for both ATP and ADP are limited to the results from the coated column. As expected, the calibration curves for adenosine were similar in their slopes and dynamic range regardless of column type. The slope of the AMP calibration curve using the stainless steel column was smaller than the slope using the C2 coated column. The smaller slope results in a lower assay sensitivity using the stainless steel column. The AMP calibration curve acquired using the C2 coated column was linear from 100 fg/µL to 2 ng/ µL (>4 orders of magnitude), while the curve acquired using a stainless steel column (uncoated) was linear only from 5pg/ µL to 2 ng/ µL (<3 orders of magnitude). The ATP and ADP calibrations curves constructed using the C2 coated column show a dynamic range of greater than 3 orders of magnitude (2pg/ µL - 5 ng/ µL for ATP and 500 fg/ µL - 5 ng/ µL for ADP). The entire calibration range for each of ATP, ADP, AMP, and Adenosine is provide in the following chart:

**Table 2: Calibration Range For ATP, ADP, AMP, and Adenosine shown in FIGs. 10A-10D:**

| | Range (ATP) | Range (ADP) | Range (AMP) | Range (Adenosine) |
|---|---|---|---|---|
| C2 Coated Column | 2 pg/µL- 5 ng/µL (r = 0.996) | 500 fg/µL- 5 nL/µL (r = 0.9986) | 100 fg/µL-2 ng/µL (r = 0.9972) | 20fg/µL-0.5ng/µL (r = 0.9895) |
| Stainless Steel Column | No peak | No peak | 5 pg/µL-2 ng/µL (r = 0.9977) | 200 fg/µL-0.5 ng/µL (0.9908) |

To obtain the results shown in FIGs. 9 and 10, the following experimental conditions were utilized. An ultra performance HPLC system (ACQUITY UPLC I-Class System, Waters Corporation, Milford MA) was provided with a MS detector (Xevo TQ-XS also from Waters Corporation, Milford, MA). The ACQUITY system included the I-class binary solvent manager and I-class sample manager with a flow through needle. The mass detector included an ESI source and tool-free ESI probe. The columns used were a stainless steel ACQUITY HSS T3, 1.8 µm, 2.1 x 50 mm (Waters Corporation) and a coated column ACQUITY PREMIER HSS T3, 1.8 µm, 2.1 x 50 mm (Waters Corporation). Column temperature was set and maintained at 35 °C. The mobile phases included two components. Mobile Phase A: 10 mM ammonium acetate, pH 6.8 (0.2% acetonitrile) and Mobile Phase B: acetonitrile. The mobile phase components were run according to the following gradient conditions.

**Table 3: Experimental Conditions:**

| **Time** | **Flow Rate** | **% A** | **% B** | **Curve** |
|---|---|---|---|---|
| Initial | 0.5 mL/min | 99.5 | 0.5 | -- |
| 0.1 | 0.5 mL/min | 99.5 | 0.5 | 6 |
| 0.2 | 0.5 mL/min | 92.0 | 8.0 | 6 |
| 0.7 | 0.5 mL/min | 92.0 | 8.0 | 6 |
| 0.8 | 0.5 mL/min | 70.0 | 30.0 | 6 |
| 0.9 | 0.5 mL/min | 70.0 | 30.0 | 6 |
| 1.0 | 0.5 mL/min | 99.5 | 0.5 | 6 |
| 2.0 | 0.5 mL/min | 99.5 | 0.5 | 11 |

MS conditions were as follows:
Ion Mode: Negative Electrospray (ES-)
Capillary Voltage: about -0.5 kV (fined tuned to maximize the signal)
Desolvation Temperature: 600 °C
Desolvation Gas Flow: 1000 L/Hr
Cone Gas Flow: 150 L/Hr
Nebulizer Gas Pressure: 7.0 Bar
For the analysis, analyte SRM conditions were:

| | **MW** | **Transition** | **Cone Voltage (V)** | **Collision Energy (eV)** |
|---|---|---|---|---|
| **ATP** | 507.18 | 505.96 >158.84 | 30 | 30 |
| **ADP** | 427.20 | 425.98 >134.00 | 48 | 22 |
| **AMP** | 347.22 | 346.00 >134.00 | 50 | 30 |
| **Adenosine** | 267.24 | 266.02 >134.00 | 32 | 18 |

### PHARMACOKINETIC EVALUATION EXAMPLE

Three uninfected male rhesus monkeys (*Macaca mulatta*) were used for the pharmacokinetic study. Remdesivir was formulated in solution at a pH 4-6.0, and 2 ml kg⁻¹ was administered by slow bolus (approximately 1 min) for a final dose of 10 mg kg⁻¹. Blood samples for plasma were collected from a femoral vein/artery and were taken from each monkey over a 24-h period. Plasma samples were obtained at predose and at 0.083, 0.25, 0.5, 1, 2, 4, 8, and 24 h postdose. Blood samples for plasma were collected into chilled collection tubes containing sodium fluoride/potassium oxalate as the anticoagulant and were immediately placed on wet ice, followed by centrifugation to obtain plasma. Plasma samples were frozen immediately and stored at ≤60 °C until analyzed.

For plasma analysis, an aliquot of 25 µl of each plasma sample was treated with 100 µl of 90% methanol and acetonitrile mixture (1:1, v:v) and 10% water with 20 nM 5-(2-aminopropyl)indole as an internal standard. Then, 100 µl of samples were filtered through an 96 well 0.2 µm C2 coated filter plate (sold under the same QuanRecovery Plate with MaxPeak High Performance Surfaces, available from Waters Corporation, Milford, MA). Filtered samples were dried down completely for approximately 20 min and reconstituted with 1% acetonitrile and 99% water with 0.01 *%* formic acid (i.e., a buffer solution). An aliquot of 10 µl was injected for LC-MS/MS using a HTC Pal autosampler. Analytes were separated on a C2 coated column Atlantis PREMIER BEH C18 AX column (50 × 2.1 mm, 1.7 µm) (i.e., a mixed-mode stationary phase having a reverse phase/anion-exchange mixed mode chemistry) using a Waters Acquity ultra performance LC (Waters Corporation, Milford, MA, USA), a flow rate of 0.26 ml min⁻¹, and a gradient from Mobile phase A containing 0.2% formic acid in 99% water and 1% acetonitrile to mobile phase B containing 0.2% formic acid in 95% acetonitrile and 5% water over 4.5 min. For MS/MS analysis, we used a Waters Xevo TQ-S in positive multiple reaction monitoring mode using an electrospray probe. Plasma concentrations of remdesivir, and its metabolites remdesivir (nucleotide monophosphate), remdesivir (nucleotide diphosphate) and remdesivir (nucleotide triphosphate) were determined using an 8-point calibration curve spanning a concentration range of over three orders of magnitude. Quality control samples were run at the beginning and end of the run to ensure accuracy and precision within 20%.

### EXPERIMENTAL EXAMPLE OF SEPARATING AND ANALYZING REMDESIVIR

The following conditions were used to analyze remdesivir, its parent nucleoside, and the nucleoside triphosphate using a mixed-mode reversed-phase/anion exchange stationary phase based on bridged-ethyl hybrid particles; Atlantis PREMIER BEH C18 AX Column (commercially available from Waters Corporation, Milford, MA).

**Table 4: Test Conditions**

| **Test Conditions** | |
|---|---|
| Column | Atlantis BEH C18 AX 1.7µm, 2.1 x 50 mm (Waters Corporation) C2 coated stainless steel column |
| LC System | Acquity Premier Quaternary System (Waters Corporation) |

| Solvent Manager | |
|---|---|
| Mobile Phase A | 100% Acetonitrile |
| Mobile Phase B | IonHance CX-MS Concentrate A pH5 (1:5 Dilution) p/n 186009280 |
| Mobile Phase C | 100% 18 MΩ water |
| Mobile Phase D | IonHance Ammonium Acetate pH 6.8 Concentrate (1:5 Dilution) p/n 186009705 |
| Injection Volume | 1 uL |
| Flow Rate | 0.5 mL/min |
| Sample Temperature | 12 ºC |
| Column Temperature | 50 ºC |

| Detectors | |
|---|---|
| Detector 1 | Acquity Premier PDA Detector (Waters Corporation) |
| Detector 2 | Acquity QDa Mass Detector (Waters Corporation) |

Standards were purchased from multiple sources. Remdesivir was purchased from Ambeed (Arlington Heights, IL, USA), remdesivir nucleoside was purchased from Biosynth-Carbosynth (Itasca, IL, USA), and the remdesivir nuceloside triphosphate (was purchased from AOBIOUS, Inc. (Gloucester, MA, USA).

Two standard samples containing both remdesivir and the remdesivir nucleoside triphosphate were prepared in the concentration ratios of 500:50 µg/mL (sample:S1) and 50:500 µg/mL (sample:S2). These ratios were prepared to mimic two different timepoints from dosing and start of metabolic conversion. A single component sample of remdesivir nucleoside (S3) was prepared at 10 µg/mL and 100 µg/mL concentrations.

Chromatographic mobile phases were prepared on-line using a quaternary pump with IonHance buffer concentrates (which contain 20% (v/v) acetonitrile). The buffer concentrates were prepared with 1:5 dilution to achieve final concentrations of 100 mM in 4% acetonitrile for the IonHance CX-MS Concentrate A, pH 5 and 200 mM in 4% acetonitrile for the IonHance Ammonium Acetate pH6.8 Concentrate. The 1:5 dilutions were mixed with 18 MΩ water and acetonitrile to form the gradient. The final gradient was 5 mM ammonium acetate 6.8 in 0% acetonitrile to 20 mM ammonium acetate pH6.8 in 60% acetonitrile in 4 minutes using a linear gradient (curve 6) and return to initial in 0.5 minutes. A longer 8-minute gradient was also run with good results.

Remdesivir has a moderate logP value of 2.01, so it was predicted that a relative high percentage of acetonitrile would be required to elute the prodrug. It was also predicted that pH would have a critical effect on the retention of the nucleoside triphosphate.

The retention factor for remdesivir was calculated for a series of injections made using isocratic elution conditions and mobile phases prepared with an acetonitrile content range of 40 to 60% in 10 mM ammonium acetate. Additionally, the effect of pH values 4.8 and 6.8 was evaluated.

To achieve retention factors that were greater than one but less than 10, remdesivir required that at least 40 to 60% acetonitrile be used, regardless of the pH of the aqueous mobile phase. A higher organic endpoint was used preferred for the potential application of the method to additional, more hydrophobic analytes. Like in the screening of conditions for remdesivir, two pH values were also used to analyze remdesivir nucleoside triphosphate. However, most of the analyses were conducted using the preferred pH of 6.8. The higher pH produced sharper peaks than the pH 4.8 mobile phase, albeit with slightly lower resolution between the diphosphate and triphosphate forms. If desired, mobile phase pH can thus be adjusted to fine tune the separation.

A comparison of the two standards is shown in **FIG. 11A** and **FIG. 11B**. The top chromatograph **(****FIG. 11A****)** was obtain from sample S1 (a sample comprised of remdesivir at 10 times the concentration of remdesivir nucleoside triphosphate); while the bottom chromatograph **(****FIG. 11B**) was obtained from sample S2 (the opposite ratio, 1 part remdesivir to 10 parts remdesivir nucleoside triphosphate). The mass load-on-column for remdesivir was approximately 0.8 nmol for **FIG. 11A** and 0.08 nmol for **FIG. 11B**.

Peak identification was confirmed using detector 2, Acquity QDa Mass Detector and extracting the m/z values for each analyte, see **FIGs. 12A, 12B,** and **12C****.** At pH 6.8, the anion-exchange sites were tuned to elute remdesivir triphosphate within the gradient, while the C18 groups played a greater role in the retention of remdesivir, The primary goal of good retention for remdesivir triphosphate and resolution from remdesivir was achieved using these conditions. Additional method optimization could be undertaken to improve peak symmetry for remdesivir triphosphate, such as reducing mass injected on column.

The final gradient was also used to analyze the remdesivir nucleoside (sample S3) together with the 1:10 ratio of remdesivir to remdesivir triphosphate (sample S2), see **FIG. 13****.** As the remdesivir nucleoside (S3) analyte elutes earlier in the gradient (see dashed trace line which elutes prior to 2.00 minutes) and does not interfere with the nucleoside triphosphate (see solid trace line of S2 which elutes after the 2.00 minute mark), it may provide a new starting point for additional gradient optimization.

Ammonium acetate mobile phases prepared in these examples did not include the use of ion pairing reagents. As a result, the mobile phase solutions (with the ammonium acetate) provide the option of using optical as well as MS detection. Fast and easy mobile phase preparation was accomplished by using readily available, MS-certified buffer concentrates.

## Claims

1. A method of detecting remdesivir in a sample, the method comprising:
providing a sample to a chromatography column housing a mixed-mode stationary phase disposed therein, the chromatography column comprising an alkylsilyl coating covering at least a portion of wetted internal surfaces of the chromatography column;
separating and eluting remdesivir from the sample by applying a gradient of a mobile phase solution comprising ammonium acetate; and
detecting remdesivir in the eluent using a mass spectrometry detector or an optical detector.

2. The method of claim 1, wherein the mobile phase solution does not include an ion pairing reagent.

3. The method of claim 1, wherein the mobile phase solution has a pH within the range of 4.8 to 7.

4. The method of claim 1, further comprising detecting one or more phosphorylated metabolites of remdesivir in the eluent using the mass spectrometry detector or the optical detector.

5. The method of claim 1, wherein the gradient is a linear gradient.

6. The method of claim 1, wherein the gradient is achieved by varying a concentration of ammonium acetate.

7. The method of claim 6, wherein the gradient is achieved by varying a concentration of acetonitrile.

8. The method of claim 7, wherein the concentration of acetonitrile ranges from 0 to 60 volume percent.

9. The method of claim 1, wherein the alkylsilyl coating comprises bis(trichlorosilyl)ethane or bis(trimethoxysilyl)ethane.

10. A kit for analyzing a plasma sample including remdesivir, the kit comprising:
an alkylsilyl coated filter plate including a plurality of wells, wherein, during use, a plasma sample is filtered through the alkylsilyl coated filter plate to produce a filtered plasma sample;
a chromatography column comprising:
(i) a metal body having internal surfaces defining a flow path from an inlet to an outlet of the column, at least a portion of the internal surfaces of the metal body having an alkylsilyl coating deposited thereon; and
(ii) a mixed-mode stationary phase having a reverse phase/anion-exchange mixed mode chemistry, the mixed-mode stationary phase housed within the flow path, and distinct from the metal body,
wherein, during use, a filtered plasma sample is passed through the chromatography column; and
a vial of a buffer comprising ammonium acetate, wherein, during use, a filtered plasma sample is reconstituted with the buffer after drying and prior to passing through the chromatography column under gradient conditions to produce an eluent, wherein remdesivir is detectable in the eluent using a mass spectrometer detector or an optical detector.

11. The kit of claim 10, further comprising a container of an internal standard.

## Patentansprüche

1. Verfahren zum Nachweisen von Remdesivir in einer Probe, wobei das Verfahren umfasst:
Bereitstellen einer Probe in einer Chromatographiesäule, in der eine darin angeordnete stationäre Phase im Mischmodus aufgenommen ist, wobei die Chromatographiesäule eine Alkylsilyl-Beschichtung umfasst, die zumindest einen Teil von benetzten Innenflächen der Chromatographiesäule bedeckt;
Trennen und Eluieren von Remdesivir aus der Probe durch Anwenden eines Gradienten einer Mobilphasenlösung, die Ammoniumacetat enthält; und
Nachweisen von Remdesivir in dem Eluenten unter Verwendung eines Massenspektrometrie-Detektors oder eines optischen Detektors.

2. Verfahren nach Anspruch 1, wobei die Mobilphasenlösung kein Ionenpaarungsreagenz enthält.

3. Verfahren nach Anspruch 1, wobei die Mobilphasenlösung einen pH-Wert im Bereich von 4,8 bis 7 aufweist.

4. Verfahren nach Anspruch 1, ferner umfassend das Nachweisen eines oder mehrerer phosphorylierter Metaboliten von Remdesivir im Eluenten unter Verwendung des Massenspektrometrie-Detektors oder des optischen Detektors.

5. Verfahren nach Anspruch 1, wobei der Gradient ein linearer Gradient ist.

6. Verfahren nach Anspruch 1, wobei der Gradient durch Variieren einer Konzentration von Ammoniumacetat erreicht wird.

7. Verfahren nach Anspruch 6, wobei der Gradient durch Variieren einer Konzentration von Acetonitril erreicht wird.

8. Verfahren nach Anspruch 7, wobei die Konzentration von Acetonitril im Bereich von 0 bis 60 Volumenprozent liegt.

9. Verfahren nach Anspruch 1, wobei die Alkylsilyl-Beschichtung Bis(trichlorsilyl)ethan oder Bis(trimethoxysilyl)ethan umfasst.

10. Kit zum Analysieren einer Plasmaprobe, die Remdesivir enthält, wobei das Kit umfasst:
eine mit Alkylsilyl beschichtete Filterplatte mit einer Mehrzahl von Vertiefungen, wobei bei der Verwendung eine Plasmaprobe durch die mit Alkylsilyl beschichtete Filterplatte gefiltert wird, um eine gefilterte Plasmaprobe zu erzeugen;
eine Chromatographiesäule, umfassend:
(i) einen Metallkörper mit Innenflächen, die einen Strömungsweg von einem Einlass zu einem Auslass der Säule definieren, wobei zumindest ein Abschnitt der Innenflächen des Metallkörpers eine darauf angeordnete Alkylsilyl-Beschichtung aufweist; und
(ii) eine stationäre Phase im Mischmodus mit einer chemischen Zusammensetzung im Reverse-Phase-/Anionen-Austausch-Mischmodus, wobei die stationäre Phase im Mischmodus im Strömungswegs aufgenommen ist und sich vom Metallkörper unterscheidet,
wobei bei der Verwendung eine gefilterte Plasmaprobe durch die Chromatographiesäule geleitet wird; und
ein Fläschchen mit einem Puffer, der Ammoniumacetat umfasst, wobei bei der Verwendung eine gefilterte Plasmaprobe nach dem Trocknen und vor dem Durchleiten durch die Chromatographiesäule unter Gradientenbedingungen mit dem Puffer rekonstituiert wird, um einen Eluenten zu erzeugen, wobei Remdesivir im Eluenten unter Verwendung eines Massenspektrometer-Detektors oder eines optischen Detektors nachweisbar ist.

11. Kit nach Anspruch 10, das ferner einen Behälter mit einem internen Standard umfasst.

## Revendications

1. Procédé de détection du remdesivir dans un échantillon, ledit procédé comprenant :
la fourniture d'un échantillon dans une colonne chromatographique logeant une phase stationnaire à mode mixte disposée à l'intérieur de celle-ci, la colonne chromatographique comprenant un revêtement d'alkylsilyle recouvrant au moins une partie des surfaces internes mouillées de la colonne chromatographique ;
la séparation et l'élution du remdesivir à partir de l'échantillon, par application d'un gradient d'une solution de phase mobile comprenant de l'acétate d'ammonium ; et
la détection du remdesivir présent dans l'éluant à l'aide d'un détecteur de spectrométrie de masse ou d'un détecteur optique.

2. Procédé de la revendication 1, dans lequel la solution de phase mobile ne comprend pas de réactif d'appariement d'ions.

3. Procédé de la revendication 1, dans lequel la solution de phase mobile présente un pH compris entre 4,8 et 7.

4. Procédé de la revendication 1, comprenant en outre la détection d'un ou plusieurs métabolites phosphorylés du remdesivir présent dans l'éluant à l'aide du détecteur de spectrométrie de masse ou du détecteur optique.

5. Procédé de la revendication 1, dans lequel le gradient est un gradient linéaire.

6. Procédé de la revendication 1, dans lequel le gradient est obtenu en faisant varier la concentration d'acétate d'ammonium.

7. Procédé de la revendication 6, dans lequel le gradient est obtenu en faisant varier la concentration d'acétonitrile.

8. Procédé de la revendication 7, dans lequel la concentration d'acétonitrile est comprise entre 0 et 60 % en volume.

9. Procédé de la revendication 1, dans lequel le revêtement d'alkylsilyle comprend du bis(trichlorosilyl)éthane ou du bis(triméthoxysilyl)éthane.

10. Kit pour analyser un échantillon de plasma contenant du remdesivir, le kit comprenant :
une plaque filtrante revêtue d'alkylsilyle incluant une pluralité de puits, dans laquelle, lors de l'utilisation, un échantillon de plasma est filtré à travers la plaque filtrante revêtue d'alkylsilyle afin de produire un échantillon de plasma filtré ;
une colonne chromatographique, comprenant :
(i) un corps métallique dont les surfaces internes définissent un trajet d'écoulement allant d'une entrée à une sortie de la colonne, au moins une partie des surfaces internes du corps métallique ayant un revêtement d'alkylsilyle déposé sur celle-ci ; et
(ii) une phase stationnaire à mode mixte présentant une chimie à mode mixte de type phase inverse/échange d'anions, la phase stationnaire à mode mixte étant logée à l'intérieur du chemin d'écoulement, et étant distincte du corps métallique,
dans lequel, lors de l'utilisation, un échantillon de plasma filtré est amené à passer à travers la colonne chromatographique ; et
un flacon contenant un tampon comprenant de l'acétate d'ammonium, dans lequel, lors de l'utilisation, un échantillon de plasma filtré est reconstitué avec le tampon après séchage et avant son passage à travers la colonne chromatographique dans des conditions de gradient afin de produire un éluant, dans lequel le remdesivir est détectable dans l'éluant à l'aide d'un détecteur de spectromètre de masse ou d'un détecteur optique.

11. Kit de la revendication 10, comprenant en outre un récipient contenant un étalon interne.
